## Europäisches Patentamt
## European Patent Office
## Office européen des brevets

(11) Publication number: **0 081 079**
**B1**

(12) **EUROPEAN PATENT SPECIFICATION**

(45) Date of publication of patent specification: **12.03.86**

(21) Application number: **82110010.4**

(22) Date of filing: **29.10.82**

(51) Int. Cl.⁴: **F 16 F 15/08,** F 16 F 1/38, F 16 F 1/46

(54) **Arrangement for damping the transmission of vibrations.**

(30) Priority: **09.12.81 SE 8107365**
**15.06.82 SE 8203697**

(43) Date of publication of application:
**15.06.83 Bulletin 83/24**

(45) Publication of the grant of the patent:
**12.03.86 Bulletin 86/11**

(84) Designated Contracting States:
**AT BE CH DE FR GB IT LI LU NL SE**

(56) References cited:
**DE-A-2 603 995**
**DE-B-1 134 337**
**FR-A- 982 427**
**FR-A-1 099 602**
**FR-A-2 079 487**
**FR-A-2 352 643**
**FR-A-2 451 420**
**US-A-2 026 625**
**US-A-2 059 313**
**US-A-3 135 506**

(73) Proprietor: **Sunnex Aktiebolag**
**Box 116**
**S-686 00 Sunne (SE)**

(72) Inventor: **Häggman, Hardy**
**Frödingsvägen 10**
**S-686 00 Sunne (SE)**

(74) Representative: **Hynell, Magnus**
**Hynell Patenttjänst AB Box 236**
**S-683 02 Hagfors (SE)**

Courier Press, Leamington Spa, England.

EP 0 081 079 B1

## Description

### Technical Field

The invention relates to an arrangement for damping the transmission of vibrations between a vibration-producing first object, for example a vibrating machine, working equipment or tool, and a second object, for example a handle which is to be gripped by an operator, a frame, foundation or the like. More particularly the invention relates to an arrangement which includes a resilient element of polymer material, e.g. rubber, arranged between the said first and second objects.

### Background

A major problem with machines, working equipment and tools producing vibrations is the damage to which the operator can be exposed and which is caused directly or indirectly by the vibrations. Even when no injury is caused to the person, the vibrations can give rise to major problems, for example they can cause disturbing noise, cause wear in various components, etc.

Normally resilient rubber elements are employed within widely-disparate areas of technology so as to damp the transmission of vibrations. For example, rubber elements can be provided for damping the transmission of vibrations between the machine and the handle which is to be actuated by an operator.

However, when in accordance with conventional technology the flexible properties of polymer materials, e.g. rubber, are employed within a certain area of movement, damping has the disadvantage that it can be employed only within certain frequency ranges, preferably low frequencies, here up to 200—300 Hz. Because of the fact that machine weights and the hardness of the rubber control the degree of damping, it is thus not possible to accurately combine good damping properties over the entire frequency range up to say 5 000 Hz.

One reason for rubber having a very limited damping capacity, in the case of conventionally designed dampers, is that rubber and other resilient polymer materials are only slightly compressible. In connection with damping some degree of compression is taken as a basis and thus in the initial position the damper is made to function with a certain loading, i.e. so that the damping element is compressed. When the damper is subjected to vibrations, it thus operates mainly within the compressible range where the counterforces because of the incompressibility of the material increase logarithmically with the depression.

Although rubber and certain other polymer materials are only negligibly compressible, they are however extremely extensible. This has been utilised in those dampers where one object is resiliently suspended in the other, as is disclosed e.g. in US—A—2 026 625. Such an element presupposes however that one is working under specific conditions. For example such a construction cannot be employed if the arrangements are to adopt different positions in space, which is a serious disadvantage.

### Description of the Invention

One main object of the invention is to eliminate the limitations of the polymer, resilient material, a priori that of rubber, as regards compression and instead to utilise its great extensibility so that excellent possibilities are obtained for damping the transmission of vibrations, i.e. as regards vibrations to insulate a vibrations-producing object within the entire frequency range from about 8 Hz and above.

One objective of the invention is preferentially also to provide an arrangement which can function in different positions in space.

These and other objectives can be achieved when the resilient polymer element is prestressed in tension in all positions which the first and the second object can adopt relative to each other within a sphere of operation envisaged for the resilient element and under all normally prevailing loads. In other words the tensile prestress of the resilient element is so great that the element is prestressed in tension in all parts of it even when the two objects have been displaced relative to each other so far as is maximal possible or as can maximal occur in normal handling of the two objects.

Typically, the prestressing force is at least so great that the extension which this causes is greater than the amplitude of the vibration oscillations caused by the said first object. The absolute value of the degree of prestress depends on a number of factors such as the dimensions of the element, the properties of the polymer material and on the load. Normally however the prestress is so great that the elastic extension is between 15 and 250%. This also means that the prestressing force must be so great that the resilient element will remain, under all the vibrational stresses normally encountered, loaded in tension, i.e. not subjected to compression, preferably regardless of the direction of the vibrational movement.

In accordance with one embodiment the element is prestressed in tension even when it is not interconnected with one or both of the objects. This signifies that the prestressed element can have the form of a standard component ready for assembly and suitable in the prestressed state for mounting at the desired location, e.g. in a machine, in a machine handle or the like. Furthermore one aspect of the invention involves the element being subjected to a tensile prestress which is not affected by the mass of the object.

The resilient element is appropriately restrained or arranged to be symmetrically restrained between the two objects, but it is also possible to envisage asymmetrical restraint. In the first case the said initial object can be combined with the resilient element in a non-peripheral section, e.g. at its centre, from which the element extends outwards towards peripheral attachment pins, where it is joined with the second object. In this case the resilient element can include a prestressed membrane. It can also have the geometric form of for example spokes in a wheel.

As mentioned in the preamble the second object can have a number of differing shapes. One typical sphere of application for the invention is however handles on vibrating tools, working machines and the like. In this case the second object can be described in such a way that it includes a tube or tubular channel. In accordance with a preferred embodiment of the invention two of the resilient elements are arranged in this tube or tubular channel at some distance from each other or beyond both ends of the tube or tubular channel. This signifies that the first object is connected to the handle via the two resilient elements inside the tube or in the area inside or outside both ends of the handle. Here it is appropriate to provide a limiting organ or buffer inside the tube or channel so as to restrict the movements of the second object, i.e. the handle, in the radial direction towards the first object. The need for such a restriction device or buffer can be particularly pressing if the handle is also to be used to raise a heavy machine or the like. This restricting device or buffer here at the same time provides the extreme limits for the "normal sphere of working" of the resilient element, which are referred to above.

It should also be obvious that the application of the invention is not restricted merely to such membrane-shaped elements as illustrated in the example. Even elements which are prestressed in for example only two main directions can thus also be employed in certain applications.

Further aims of and characteristics of the invention will be illustrated by the following description of preferred embodiments and by the following patent claims.

Brief Description of Drawings

In the following description of preferred embodiments reference will be made to the appended drawings in which:

Fig. 1 is a schematic force-extension diagram of a rubber element

Fig. 2 is a diagram which illustrates schematically the tensile stresses in a resilient element in accordance with the invention as compared with a conventional element

Fig. 3 is a side view, partially in section, of a handle provided with two resilient elements in accordance with a first embodiment of the invention

Fig. 4 gives an axial section through a handle having resilient elements arranged at each end in accordance with a second embodiment of the invention

Fig. 5 is a side view of a rivet dolly provided with a pair of resilient elements in accordance with the invention and

Fig. 6 gives an axial section through a prestressed element in accordance with one embodiment of the invention before the element is mounted in its position of use.

Best Mode of Carrying Out the Invention

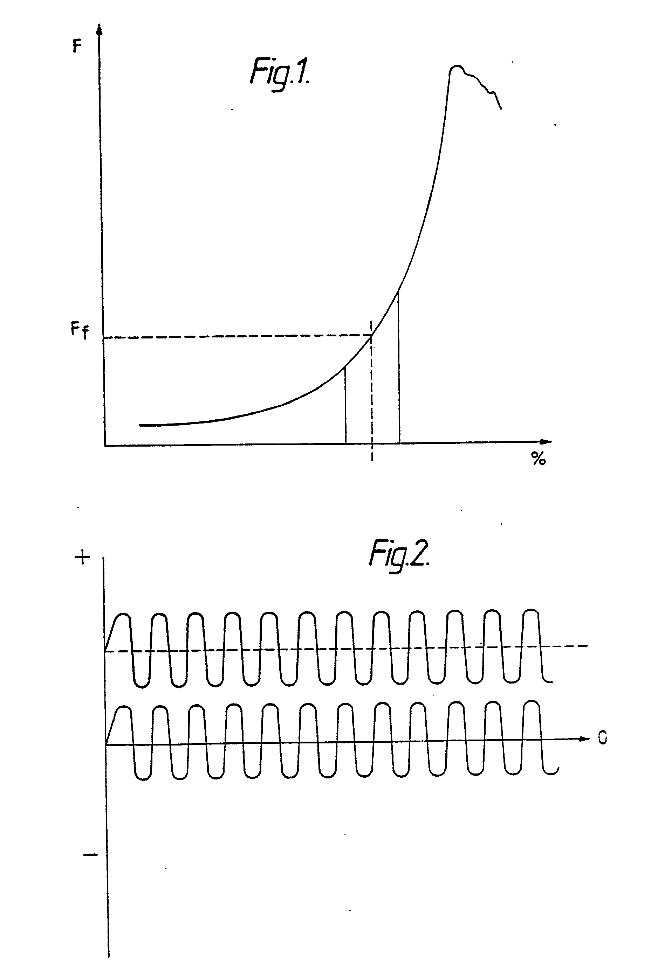

In accordance with the invention, as resilient element use is made of a polymer material, advisably rubber, which is prestressed. More particularly the prestressing force should be so great that the extension caused by the prestressing is greater than the amplitude of the vibrational oscillations. This means that it is necessary to work in an area of the force-extension curve, Fig. 1, which is slightly up on the steep portion of the curve. The same case is also illustrated in the diagram in Fig. 2 where the lower curve illustrates conventional technique and the upper curve the conditions prevailing in accordance with the invention.

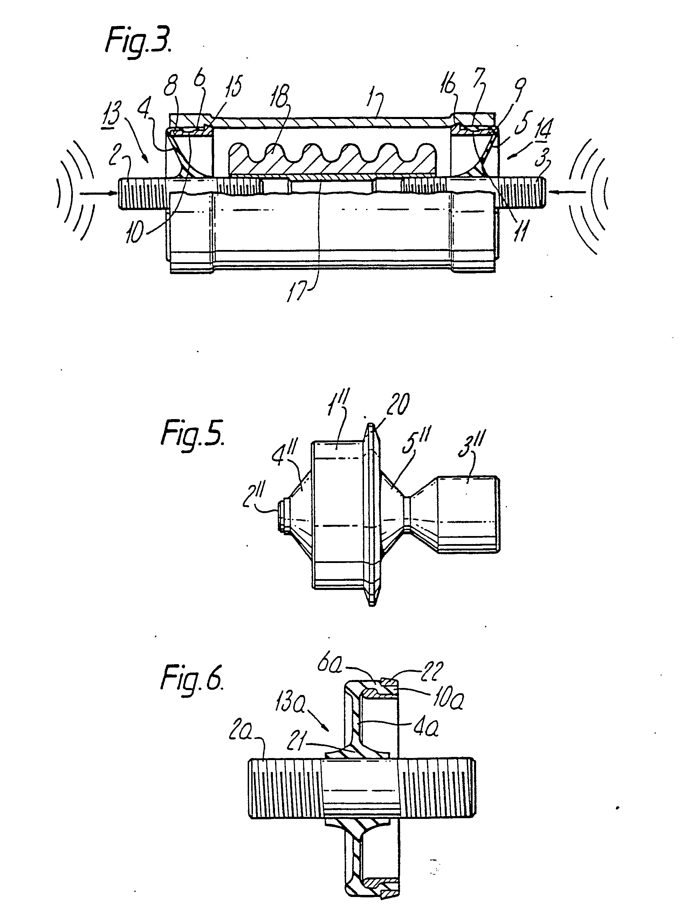

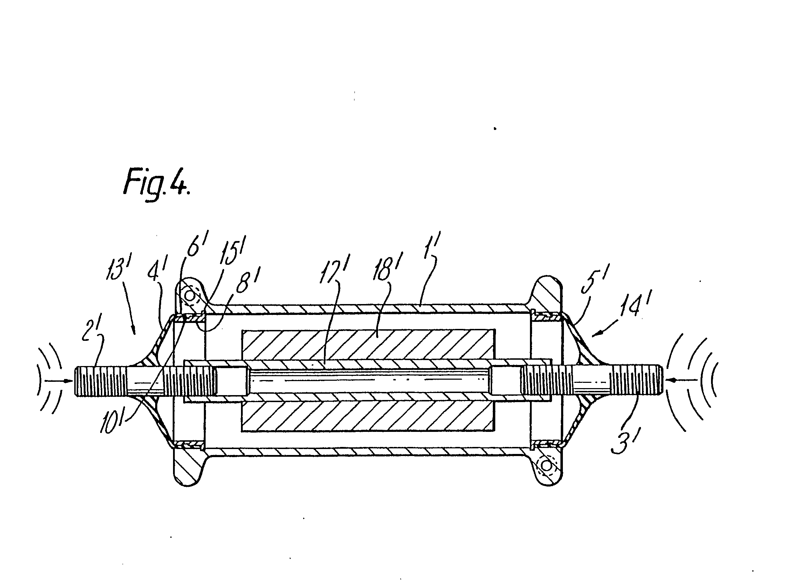

The arrangement in Fig. 3 comprises a tubular handle 1 and a pair of rods 2 and 3 which are assumed to form part of a vibrating unit, e.g. a machine. The components 2 and 3 here comprise what has been designated in the preamble as the vibration-producing first object, whilst the handle 1 forms the said second object. The vibration rods 2 and 3 are each joined to their rubber membrane 4 and 5 respectively. In accordance with the embodiment the rods 2 and 3 are joined with the respective membranes 4 and 5 by vulcanising. The membranes 4 and 5 are considerably extended in the radial plane and their bent over edges 6 and 7 are threaded over a ring 8 and 9 respectively so that the portions of the membrane between the rods 2 and 3 and rings 8 and 9 respectively are greatly extended. The edge portions 6 and 7 are joined with the outsides of rings 8 and 9 by locking using an outer clamping ring which is not shown. To further improve adhesion the rings are provided with a groove 10 and 11 respectively.

The resilient elements 13 and 14 respectively thus described are assembled in both ends of the tubular handle 1. For this purpose the rings 8 and 9 are provided with a snap flange 15 and 16 respectively which engages in corresponding grooves on the inside of the tube 1.

The two rods 2 and 3 are also joined to each other by a tube 17 inside the handle tube 1. The rods 2 and 3 which are threaded at both ends are screwed into the tube 17 which for this purpose is provided with internal threads. By screwing the rods 2 and 3 in this manner into the tube 17 the membranes 4 and 5 are stretched further, and simultaneously as a result of this extension they adopt the shape of cones facing the interior of the handle. The total extension, i.e. the total initial (radial) elongation of membranes 4 and 5 and the elongation obtained by screwing the rods 2 and 3 into the tube 17 is by this means so great that it exceeds the amplitude of the vibrations, regardless of the direction of oscillation. Thus using the arrangement shown in Fig. 3 extremely good vibration damping properties are achieve both in the radial and axial planes. The thickness of the membranes 4 and 5 in the space between rods 2 and 3 and the rings 8 and 9 is between 5 and 1 mm in accordance with the embodiment.

The handle 1 illustrated in Fig. 3 is also to be capable of use for lifting relatively heavy machines, tools and the like. To prevent the membranes 4 and 5 being overloaded during this or jamming, a restricting device or buffer 18 made of rubber is provided around the internal tube 17 so that the movements of the handle 1 in the radial direction are restricted.

Fig. 4 shows a handle 1' which is a variation of the handle 1 shown in Fig. 3. The two resilient elements 13' and 14' are analogously designed and have components which correspond to those in the embodiment shown in Fig. 3, so that the same notation has been employed for corresponding components with the supplement '. Hence for a description of the various components reference should be made to the above mentioned description of Fig. 3. The only fundamental difference in this case is that the two rods 2' and 3' have been screwed away from each other so that the membranes 4' and 5' instead extend outwards from the interior of the handle.

Fig. 5 also illustrates an application of the same principle as in Fig. 4. The handle 1" in this case comprises a handle to a rivet dolly which is provided with a flange 20 as thumb grip. The two prestressed membranes have been designated 4" and 5". Of the left hand rod only the end 2" can be seen. The other rod is screwed into the rivet dolly 3". The arrangement shown in Fig. 5 has proved to have extremely good properties as a rivet dolly, which means that the resilient elements also have a very good capacity for damping vibrations in the axial direction. Examples of the spheres of application for a rivet dolly as shown in Fig. 5 are to be found in the aircraft industry where it is often necessary to work within very confined spaces.

Fig. 6 ilustrates a prestressed damping element 13a before this is mounted in its use position. The element consists of a threaded rod 2a on which the resilient element 13a is vulcanised by means of its wide central portion 21 in the same way as in the embodiments described previously. From this wide portion 21 a relatively thin member is 4a extends outwards towards the edge portion 6a which has been turned over a ring 10a. To ensure fixing of the edge portion 6a over the ring 10a there is an outer ring 22 which was also mentioned in conjunction with Fig. 3, so that the rubber edge portion 6a is clamped firmly between the inner ring 10a and the outer ring 22. The latter can also act as flange for snap-action in the same way as the components 15, 15' in the preceding embodiments. Hence the arrangement illustrated in Fig. 6 can comprise a ready-made element which can be employed for a number of different applications. The element should preferably be made in different sizes and with varying appearance so that it can fit in the majority of cases without needing to be modified. To increase the prestressing naturally this element can also be stretched further by axially extending it in the same way as shown in connection with Fig. 3, 4 and 5.

## Claims

1. Arrangement for damping the transmission of vibrations between a vibration-producing first object (2, 3) e.g. a vibrating machine, working equipment or tool, and a second object (1) for example a handle which is to be gripped by an operator, a frame, foundation or the like, comprising a resilient element (4, 7, 11) of polymer material arranged between the said first (2, 3) and second (1) objects, characterised in that the resilient element (4, 7, 11) is prestressed in tension in all positions which the first (2, 3) and second object (1) can adopt relative to each other within a sphere of operation envisaged for the resilient element and under all normally prevailing loads.

2. Arrangement as in claim 1, characterised in that the resilient element (4, 7, 11) is symmetrically restrained or arranged to be symmetrically restrained between the two objects.

3. Arrangement as in claims 1—2, characterised in that the resilient element (4, 7, 11) is asymmetrically restrained or arranged to be asymmetrically restrained between the two objects.

4. Arrangement as in claim 3, characterised in that the said first object (2, 3) is joined with the said resilient (4, 7, 11) element in a non-peripheral portion from which the element extends outwards towards peripheral attachment points where it is joined with the said second object.

5. Arrangement in accordance with any of claims 1—4, characterised in that the resilient element includes a resilient, prestressed member (4, 7).

6. Arrangement in accordance with any of claims 1—5, characterised in that the resilient element (4, 7, 11) includes prestressed devices which have the geometric shape of spokes in a wheel.

7. Arrangement as in any of claims 1—6, characterised in that the second object (1) includes a tube or a tubular channel (17), that two of the said resilient elements are arranged in the said tube or tubular channel at a distance from each other or beyond both ends of the tube or the channel.

8. Arrangement as in claim 7, characterised in that the restricting device or buffer (18) is arranged inside the tube (17) or channel which restricts the movements of the second object in the radial direction towards the said first object.

## Revendications

1. Agencement pour amortir la transmission des vibrations entre un premier objet (2, 3) producteur de vibrations tel qu'une machine, un équipement de travail ou un outil qui vibre et un second objet (1) par exemple un manche qui doit être saisi par un opérateur, un bâti, une assise ou analogue comrenant un élément élastique (4, 7, 11) en un matériau de polymère agencé entre lesdits premier (2, 3) et second (1) objets, caractérisé en ce que l'élément élastique (4, 7, 11) est précontraint en tension dans toutes les positions que le premier (2, 3) et le second objet (1) peuvent adopter relativement l'un à l'autre dans une sphère de fonctionnement envisagée pour l'élément élastique et sous toutes les charges régnant normalement.

2. Agencement selon la revendication 1 caractérisé en ce que l'élément élastique (4, 7, 11) est symétriquement retenu ou agencé pour être symétriquement retenu entre les deux objets.

3. Agencement selon les revendications 1—2 caractérisé en ce que l'élément élastique (4, 7, 11) est asymétriquement retenu ou agencé pour être asymétriquement retenu entre les deux objets.

4. Agencement selon la revendication 3 caractérisé en ce que ledit premier objet (2, 3) est joint audit élément élastique (4, 7, 11) en une partie non périphérique d'où l'élément s'étend vers l'extérieur vers des points périphériques de fixation où il est joint audit second objet.

5. Agencement selon l'une des revendications 1—4 caractérisé en ce que l'élément élastique comprend une membrane élastique précontrainte (4, 7).

6. Agencement selon l'une des revendications 1—5 caractérisé en ce que l'élément élastique (4, 7, 11) comprend des dispositifs précontraints qui ont la forme géométrique des rayons d'une roue.

7. Agencement selon l'une des revendications 1—6 caractérisé en ce que le second objet (1) comprend un tube ou un canal tubulaire (17), en ce que deux desdits éléments élastiques sont agencés dans ledit tube ou canal tubulaire à une distance l'un de l'autre ou au-delà des deux extrémités du tube ou du canal.

8. Agencement selon la revendication 7 caractérisé en ce que le dispositif de restriction ou tampon (18) est agencé à l'intérieur du tube (17) ou canal qui restreint les mouvements du second objet en direction radiale vers ledit premier objet.

**Patentansprüche**

1. Anordnung zum Dämpfen der Übertragung von Schwingungen zwischen einem schwingungserzeugenden ersten Gegenstand (2, 3), wie einer vibrierenden Maschine, einem Arbeitsgerät oder einem Arbeitswerkzeug, und einem zweiten Gegenstand (1), z.B. einem von einem Maschinenführer zu erfassenden Handgriff, einem Rahmen, einem Fundament oder dergleichen, mit einem elastischen Element (4, 7, 11) aus Polymermaterial, das zwischen dem ersten (2, 3) und dem zweiten (1) Gegenstand angeordnet ist, dadurch gekennzeichnet, daß das elastische Element (4, 7, 11) bei allen Stellungen, die der erste (2, 3) und der zweite Gegenstand (1) innerhalb eines für das elastische Element vorgesehenen Betriebsbereiches und unter allen mormalerweise herrschenden Belastungen relativ zueinander einnehmen können, unter Zug vorgespannt ist.

2. Anordnung nach Anspruch 1, dadurch gekennzeichnet, daß das elastische Element (4, 7, 11) symmetrisch eingespannt oder angeordnet ist, um symmetrisch zwischen den Gegenständen eingespannt zu werden.

3. Anordnung nach Ansprüchen 1—2, dadurch gekennzeichnet, daß das elastische Element (4, 7, 11) asymmetrisch eingespannt oder angeordnet ist, um asymmetrisch zwischen den Gegenständen eingespannt zu werden.

4. Anordnung nach Anspruch 3, dadurch gekennzeichnet, daß der erste Gegenstand (2, 3) mit dem elastischen Element (4, 7, 11) in einem nicht peripheren Bereich verbunden ist, von dem aus sich das Element nach außen zu peripheren Befestigungspunkten erstreckt, an denen es mit dem zweiten Gegenstand verbunden ist.

5. Anordnung nach irgendeinem der Ansprüche 1—4, dadurch gekennzeichnet, daß das elastische Element eine elastische, vorgespannte Membran (4, 7) aufweist.

6. Anordnung nach irgendeinem der Ansprüche 1—5, dadurch gekennzeichnet, daß das elastische Element (4, 7, 11) vorgespannte Einrichtungen aufweist, die die geometrische Form von Radspeichen haben.

7. Anordnung nach irgendeinem der Ansprüche 1—6, dadurch gekennzeichnet, daß der zweite Gegenstand (1) ein Rohr oder einen rohrartigen Kanal (17) aufweist, daß zwei der elastischen Elemente in dem Rohr oder rohrartigen Kanal im Abstand voneinander oder jenseits beider Enden des Rohres oder Kanals angeordnet sind.

8. Anordnung nach Anspruch 7, dadurch gekennzeichnet, daß die Begrenzungseinrichtung oder der Puffer (18) innerhalb des Rohres (17) oder Kanals angeordnet ist, welches bzw. welcher die Bewegungen des zweiten Gegenstandes in radialer Richtung gegenüber dem ersten Gegenstand begrenzt.

Fig.1.

Fig.2.

Fig.3.

Fig.5.

Fig.6.

Fig.4.